# EUROPÄISCHE PATENTSCHRIFT

(11) **EP 2 087 316 B1**
(45) Veröffentlichungstag und Bekanntmachung des Hinweises auf die Patenterteilung: **22.05.2019**
(21) Anmeldenummer: 07803484.0
(22) Anmeldetag: 14.09.2007
(51) Int. Cl.: G01C 21/32, G09B 29/10

(54) **Kartendatenspeichermedium, Verfahren zum Betrieb einer Navigationsvorrichtung, und Navigationsvorrichtung**
Map data storage medium, method of operating a navigation apparatus, and navigation apparatus
Support de données géographiques, procédé de fonctionnement d'un appareil de navigation, et appareil de navigation

(30) Priorität: 07.11.2006 DE 102006052483
(43) Veröffentlichungstag der Anmeldung: 12.08.2009
(73) Patentinhaber: Robert Bosch GmbH, 70442 Stuttgart (DE)
(72) Erfinder: LISTLE, Holger, 31141 Hildesheim (DE); KREWER, Joerg, 30982 Pattensen (DE); LUEER, Stefan, 31139 Hildesheim (DE); OSMERS, Ralf, 31139 Hildesheim (DE); WALKLING, Uwe, 31035 Barfelde (DE); BRANDES, Henry, 31556 Woelpinghausen (DE); FIEDLER, Marco, 31199 Diekholzen (DE); KLEIN, Thomas, 31061 Alfeld (DE)
(86) Internationale Anmeldenummer: PCT/EP2007/059681
(87) Internationale Veröffentlichungsnummer: WO 2008/055730

(56) Entgegenhaltungen:
- WO-A-01/33395
- US-A- 4 972 319
- US-A1- 2002 019 224

## Beschreibung

### Stand der Technik

Die vorliegende Erfindung betrifft ein Speichermedium, auf dem geographische Daten eines geographischen Bereichs als Karteneinheiten zusammengefaßt gespeichert sind, gemäß dem Oberbegriff des Patentanspruchs 1, ein entsprechendes Verfahren zur Erzeugung einer Karte aus den geographische Daten gemäß Anspruch 2, und eine entsprechende Navigationsvorrichtung gemäß dem Oberbegriff des Patentanspruchs 5.

Solche Navigationsvorrichtungen sind in Fortbewegungsmitteln wie Kraftfahrzeugen, Schiffen und Flugzeugen eingebaut, um den Führer des Fortbewegungsmittel von einem aktuellen Standort zu einem gewünschten Zielort zu navigieren. Die Navigationsvorrichtungen bestimmen die aktuelle Position des Fortbewegungsmittels beispielsweise mittels GPS (Global Positioning System) und berechnen eine empfohlene Route unter Verwendung von geographischen Daten, die auf einem Speichermedium gespeichert sind.

Aus der DE 101 46 785 ist eine solche Navigationsvorrichtung bekannt, die ein Speichermedium verwendet, auf dem geographische Daten als Karteneinheiten zusammengefaßt gespeichert sind, die jeweils einem geographischen Teilbereich entsprechen, wobei sich die geographischen Teilbereiche nicht überlappen. Die geographischen Daten beziehen sich dabei entweder auf einen Punkt, der durch seine Koordinaten bestimmt ist, oder auf Linienzüge bzw. Flächen, die durch ihre Randpunkte bestimmt sind und an Karteneinheitsgrenzen aufgespalten werden. Zur Berechnung einer empfohlenen Route werden erforderliche Karteneinheiten ausgewählt und vollständig von der Navigationsvorrichtung gelesen.

Nachteilig ist, daß die einzelnen Karteneinheiten auch viel geographische Detailinformation enthalten, welche zur Navigation nicht immer erforderlich ist. Deshalb ist der Umfang der geographischen Daten, die von der Navigationsvorrichtung gelesen, gespeichert und verarbeitet werden müssen, unnötig hoch.

Aus der WO 01 / 33 395 A2 ist ein Verfahren bekannt, mit dem Karteneinheiten mit einer maximal in diesen Karteneinheiten gespeicherten Anzahl von Objekten erzeugt werden können. Dabei wird eine Karteneinheit in vier weitere, kleinere Karteneinheiten aufgeteilt, wenn die Anzahl der Objekte in der Karteneinheit über einem Maximalwert liegt. Wenn die Anzahl der Objekte in einer Karteneinheit unter einem Maximalwert liegt, wird diese Karteneinheit nicht weiter aufgeteilt.

Aus der US 2002 / 0 019 224 A1 ist ein Verfahren bekannt, Kartendaten anhand einer Quadtree-Struktur zu speichern und die Karten auf einem Mobiltelefon anzuzeigen.

Aus der US 4 972 319 A ist ebenfalls ein auf einer Quadtree-Struktur aufbauendes Verfahren zum Erstellen einer Karte bekannt.

### Offenbarung der Erfindung

Der vorliegenden Erfindung liegt die Aufgabe zugrunde, ein Speichermedium, auf dem geographische Daten eines geographischen Bereichs als Karteneinheiten zusammengefaßt gespeichert sind, ein entsprechendes Verfahren zur Erzeugung einer Karte aus den geographische Daten, und eine entsprechende Navigationsvorrichtung zu schaffen, wodurch die Menge der zu verarbeitenden Daten verringert wird.

Die der Erfindung zugrunde liegende Aufgabe wird durch ein Speichermedium mit den Merkmalen des kennzeichnenden Teils des Patentanspruchs 1, ein Verfahren nach Anspruch 2 und eine Navigationsvorrichtung mit den Merkmalen des kennzeichnenden Teils des Patentanspruchs 5 gelöst.

Erfindungsgemäß sind die Karteneinheiten hierarchisch strukturiert, wobei Karteneinheiten einer n-ten Ordnung jeweils einem geographischen Teilbereich entsprechen, wobei n eine natürliche Zahl ist, und wobei Karteneinheiten einer (n+1)-ten Ordnung jeweils einem geographischen Unterbereich eines der Teilbereiche der Erfindung entsprechen. Es ist vorgesehen, dass mindestens eine Karteneinheit geographische Daten eines bestimmten Typs aufweist. Außerdem ist eine Kennzeichnung vorgesehen, die anzeigt, daß die Karteneinheit geographische Daten des bestimmten Typs aufweist. Diese Kennzeichnung ist in einer Strukturdatei gespeichert. Die Strukturdatei umfasst zusätzlich das geographische Gebiet, dem die Karteneinheiten (17, 18 , 19) entsprechen.

Vorteilhafterweise ist es zur Navigation ausreichend, Karteneinheiten zu laden, die nicht sämtliche Detailinformation eines geographischen Teilbereichs enthalten. Es können dann Karteneinheiten mit geographischen Daten eines bestimmten Typs zur Navigation gezielt ausgewählt werden.

Erfindungsgemäß betrifft die vorliegende Erfindung ferner ein Verfahren zur Erzeugung einer Karte aus geographischen Daten eines geographischen Bereichs, die als Karteneinheiten zusammengefaßt gespeichert sind, wobei die Karteneinheiten hierarchisch strukturiert sind, wobei Karteneinheiten einer n-ten Ordnung jeweils einem geographischen Teilbereich entsprechen, wobei n eine natürliche Zahl ist, und wobei Karteneinheiten einer (n+1)-ten Ordnung jeweils einem geographischen Unterbereich eines der Teilbereiche entsprechen, mit folgenden Schritten:
- Abfordern einer Strukturdatei, wobei die Strukturdatei eine Kennzeichnung enthält, die anzeigt, welche geographische Daten die Karteneinheiten aufweisen, wobei die Strukturdatei zusätzlich das geographische Gebiet, dem die Karteneinheiten entsprechen, umfasst;
- Auswählen von Karteneinheiten mit zugehörigen geographischen Daten auf Basis der Strukturdatei;
- Lesen der ausgewählten Karteneinheiten mit den zugehörigen geographischen Daten; und
- Zusammensetzen der Karte aus den zugehörigen geographischen Daten.

Vorteilhafterweise erfolgt insbesondere das Lesen schneller, weil nicht sämtliche gespeicherte Detailinformation eines geographischen Teilbereichs gelesen werden muß, da die benötigten Karteneinheiten anhand einer zugehörigen Kennzeichnung gezielt ausgewählt werden. Hierzu kann die in der Strukturdatei gespeicherte Kennzeichnung verwendet werden.

In einer weiteren bevorzugten Ausführungsform des erfindungsgemäßen Verfahrens hat mindestens eine ausgewählte Karteneinheit nicht die erste Ordnung.

Vorteilhafterweise können mehr geographische Daten berücksichtigt werden, als in den Karteneinheiten der 1. Ordnung enthalten sind.

In noch einer weiteren bevorzugten Ausführungsform des erfindungsgemäßen Verfahrens werden Karteneinheiten mit mindestens zwei unterschiedlichen Ordnungen ausgewählt.

Vorteilhafterweise können weitere geographische Daten für mindestens einen Teilbereich in die Navigation einbezogen werden, ohne daß für andere Teilbereiche eine genauso große Datendichte verarbeitet werden muß.

Erfindungsgemäß betrifft die vorliegende Erfindung ferner eine Navigationsvorrichtung mit einer Leseeinrichtung, die eingerichtet ist, hierarchisch strukturierte Karteneinheiten zu lesen, wobei Karteneinheiten einer n-ten Ordnung jeweils einem geographischen Teilbereich entsprechen, wobei n eine natürliche Zahl ist, wobei Karteneinheiten einer (n+1)-ten Ordnung jeweils einem geographischen Unterbereich eines der Teilbereiche entsprechen und wobei die Leseeinrichtung eingerichtet ist, eine Strukturdatei anzufordern, wobei die Strukturdatei eine Kennzeichnung, die anzeigt, welche geographischen Daten die Karteneinheiten aufweisen und zusätzlich das geographische Gebiet, dem die Karteneinheiten entsprechen, beinhaltet, und wobei die Leseeinrichtung eingerichtet ist, Karteneinheiten mit zugehörigen geographischen Daten auf Basis der Strukturdatei auszuwählen.

Vorteilhafterweise ermöglicht eine solche Lesevorrichtung ein schnelles Lesen von zur Navigation unbedingt erforderlichen geographischen Daten, die beispielsweise in Karteneinheiten der 1. Ordnung und 2. Ordnung gespeichert sind, wobei auch Detailinformation gelesen werden kann, die in Einzelfällen erforderlich sein kann und in Karteneinheiten höherer Ordnung gespeichert ist.

In einer bevorzugten Ausführungsform weist die Navigationsvorrichtung ferner eine Kartenerzeugungseinrichtung auf, die eingerichtet ist, eine Karte aus den hierarchisch strukturierte Karteneinheiten zu erzeugen.

Vorteilhafterweise ermöglicht die Kartenerzeugungseinrichtung die Erzeugung einer Karte mit genau der Information, die im Einzelfall erforderlich ist.

### Kurze Beschreibung der Zeichnungen

Im folgenden wird die Erfindung mit Bezugnahme auf die Zeichnungen näher beschrieben. Es zeigen:
FIG. 1 eine schematische Ansicht eines Navigationssystem;
FIG. 2 eine Karte, die einem geographischen Teilbereich entspricht und aus hierarchisch strukturierten Karteneinheiten bis zu der 4. Ordnung zusammengesetzt ist;
FIG. 3 eine Karte, die dem geographischen Teilbereich aus FIG. 2 entspricht und aus hierarchisch strukturierten Karteneinheiten bis zu der 2. Ordnung zusammengesetzt ist;
FIG. 4. eine Karte, die dem geographischen Teilbereich aus FIG. 2 entspricht und in Unterbereichen aus hierarchisch strukturierten Karteneinheiten bis zur 4. Ordnung oder aus hierarchisch strukturierten Karteneinheiten bis zur 3. Ordnung zusammengesetzt ist; und

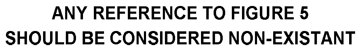

FIG. 5 eine Karte, die dem geographischen Teilbereich aus FIG. 2 entspricht und aus hierarchisch strukturierten Karteneinheiten bis zur 3. Ordnung zusammengesetzt ist.

### Ausführungsformen der Erfindung

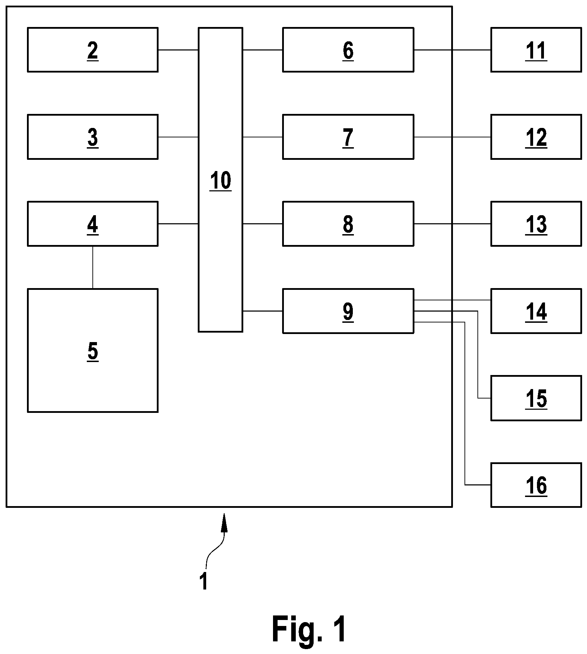

FIG. 1 ist eine schematische Ansicht eines Navigationssystems, das eine Navigationsvorrichtung 1 und weitere externe Einrichtungen 11 bis 16 aufweist, die mit der Navigationsvorrichtung 1 verbunden sind.

Die Navigationsvorrichtung 1 weist eine Kartenerzeugungseinrichtung 3, eine Leseeinrichtung 4, eine Steuerungseinrichtung 10 und weitere interne Einrichtungen 2 und 6 bis 9 auf.

Bei einem Speichermedium 5 handelt es sich beispielsweise um eine austauschbare CD-ROM (Compact Disc - Read Only Memory) oder austauschbare DVD (Digital Versatile Disc). Auf dem Speichermedium 5 sind geographische Daten gespeichert, die zu Karteneinheiten zusammengefaßt sind. Die Karteneinheiten entsprechen jeweils einem geographischen Gebiet, das etwa durch Längengrade und Breitengrade definiert ist, und sind hierarchisch organisiert. Dabei sind geographische Daten n-ter Ordnung zu Karteneinheiten n-ter Ordnung zusammengefaßt, die jeweils einem geographischen Teilbereich entsprechen, wobei n eine natürliche Zahl ist, und sind geographische Daten (n+1)-ter Ordnung zu Karteneinheiten (n+1)-ter Ordnung zusammengefaßt, die jeweils einem geographischen Unterbereich eines der Teilbereiche entsprechen. Karteneinheiten der 1. Ordnung bilden die oberste Hierarchiestufe. Die Karteneinheiten enthalten neben geographischen Daten eine eindeutige Identifizierungsnummer, die systematisch aufgebaut ist, so daß es möglich ist, die Ordnungen der Karteneinheiten und gegebenenfalls deren relative Position zu einer übergeordneten Karteneinheit zu erkennen. Vorzugsweise haben Karteneinheiten der gleichen Ordnung auch die gleiche Größe (d.h., sie umfassen ein gleich großes geographisches Gebiet) und sind rechteckig oder sogar quadratisch. Weitere Angaben zu den Karteneinheiten, wie etwa das geographische Gebiet, dem sie entsprechen, Kennzeichnungen, die anzeigen, daß sie geographische Daten eines bestimmten Typs aufweisen, und weitere Attribute, die nähere Angaben zu den geographischen Daten enthalten, sind beispielsweise in einem Datensatz einer Strukturdatei gespeichert.

Die Steuerungseinrichtung 10 steuert die Kartenerzeugungseinrichtung 3, die Leseeinrichtung 4, die weiteren internen Einrichtungen 2 und 6 bis 9 sowie den Datenaustausch zwischen diesen.

Die Steuerungseinrichtung 10 fordert zunächst die Strukturdatei an. Auf den Empfang eines Signal von einer der externen Einrichtungen 11 bis 16, wie etwa einer Eingabeeinrichtung, wählt die Steuerungseinrichtung 10 dann auf Basis der Strukturdatei bestimmte Karteneinheiten aus, die gelesen werden sollen. Die Steuerungseinrichtung 10 veranlaßt die Leseeinrichtung 4, die ausgewählten Karteneinheiten zu lesen. Die Leseeinrichtung 4 liest die ausgewählten Karteneinheiten und die Steuerungseinrichtung 10 übermittelt sie an die Kartenerzeugungseinrichtung 3. Die Kartenerzeugungseinrichtung 3 setzt aus den ausgewählten Karteneinheiten eine Karte zusammen, die dann von der Steuerungseinrichtung 10 an die weiteren internen Einrichtungen 2, 6 bis 9 übermittelt werden können. Im folgenden werden Karten beschrieben, die von der Kartenerzeugungseinrichtung für einen geographischen Bereich zusammengesetzt sind und zur Navigation eines Kraftfahrzeugs verwendet werden.

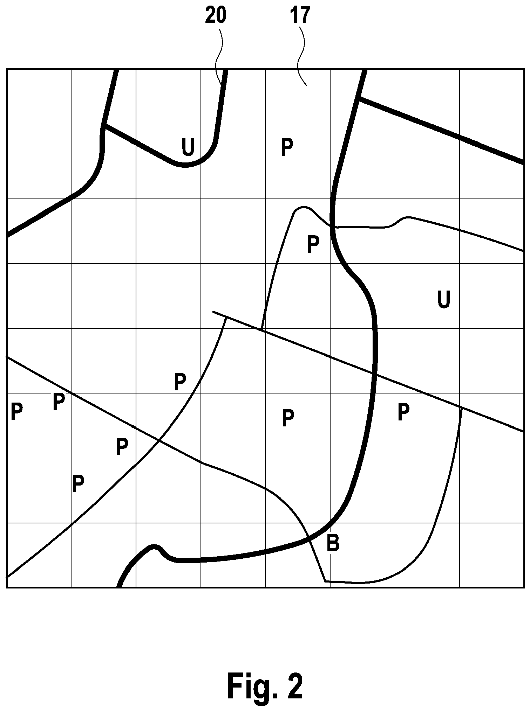

FIG. 2 zeigt eine Karte, die einem geographischen Bereich entspricht und aus hierarchisch strukturierten Karteneinheiten bis zu der 4. Ordnung zusammengesetzt ist und die geographischen Daten von allen Karteneinheiten bis zur 4. Ordnung in dem dargestellten geographischen Bereich aufweist. Der durch die Karte dargestellte geographische Bereich entspricht einer quadratischen Karteneinheit der 1. Ordnung. Die quadratische Karteneinheit der ersten Ordnung ist in 4 Karteneinheiten der 2. Ordnung unterteilt, die jeweils wiederum in 4 Karteneinheiten der 3. Ordnung unterteilt sind, die wiederum in vier Karteneinheiten der 4. Ordnung unterteilt sind (Quadtree). Die Grenzen der quadratischen Karteneinheiten sind als Linien dargestellt. Da die Grenzen der Karteneinheiten niedriger Ordnung immer mit Grenzen von Karteneinheiten höherer Ordnung, die im gleichen Unterbereich definiert sind, zusammenfallen, gibt das Raster aus Figur 2 die Grenzen der Karteneinheiten 17 der höchsten Ordnung, d.h. der 4. Ordnung wieder. Als gebogene Linien 20 sind Straßen dargestellt. Die Dicke der gebogenen Linien sagt etwas über die Bedeutung der jeweiligen Straße aus. Je dicker die dargestellte Linie ist, desto bedeutender ist die dargestellte Straße. Durch Buchstaben B, P, U werden Bahnhöfe, Parkplätze bzw. Untergrundbahnhaltestellen dargestellt.

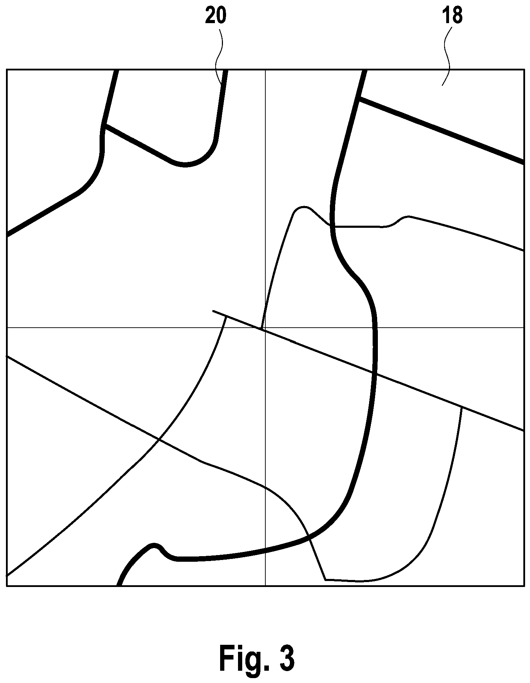

FIG. 3 zeigt eine Karte, die dem geographischen Teilbereich aus FIG. 2 entspricht und aus hierarchisch strukturierten Karteneinheiten bis zu der 2. Ordnung zusammengesetzt ist. In diesen Karteneinheiten 18 der 2. Ordnung sind keine Bahnhöfe B, Untergrundbahnhaltestellen U und Parkplätze P dargestellt, sondern lediglich Straßen 20, welche als geographische Daten der 1. Ordnung (dicke Linie) oder 2. Ordnung (dünnere Linie) gespeichert sind. Eine solche Karte könnte beispielsweise zur Routenberechnung zu einem Zielort verwendet werden, der durch eine Adresse spezifiziert ist.

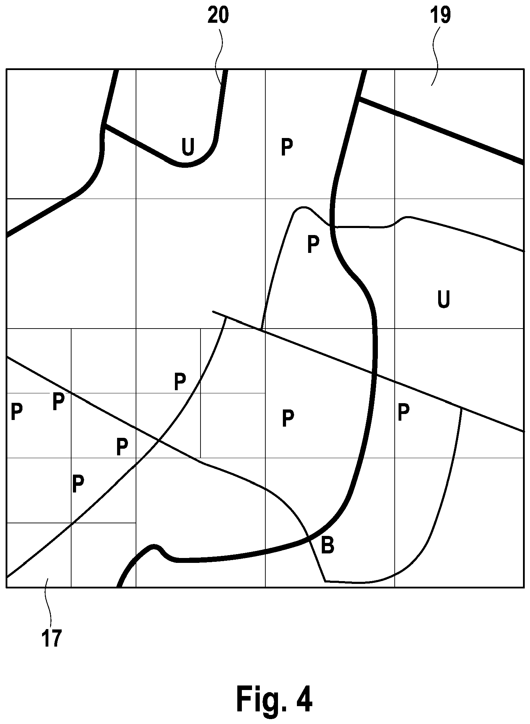

FIG. 4. zeigt eine Karte, die dem geographischen Teilbereich aus FIG. 2 entspricht und in Unterbereichen aus hierarchisch strukturierten Karteneinheiten bis zur 4. Ordnung oder aus hierarchisch strukturierten Karteneinheiten bis zur 3. Ordnung zusammengesetzt ist, wie anhand des Rasters zu erkennen ist. In dieser Karte sind sämtliche Bahnhöfe B, Untergrundbahnhaltestellen U und Parkplätze P eingezeichnet. Eine solche Karte ergibt sich, wenn Bahnhöfe und Untergrundbahnhaltestellen beispielsweise in Karteneinheiten 19 der 3. Ordnung gespeichert sind und Parkplätze P entweder in Karteneinheiten 19 der 3. Ordnung oder Karteneinheiten 17 der 4. Ordnung gespeichert sind und die Steuerungseinrichtung 10 die Leseeinrichtung veranlaßt, Karteneinheiten bis zu der Ordnung zu lesen, in der Parkplätze gespeichert sind. Die Karteneinheiten, die gelesen werden sollen, wählt die Steuerungseinrichtung 10 dabei anhand der Kennzeichnungen aus, die in der Strukturdatei gespeichert sind und angeben, in welcher Karteneinheit geographische Daten vom Typ "Parkplatz" gespeichert sind. Eine solche Karte ist beispielsweise geeignet, einen Parkplatz P, der möglichst nahe bei einer gegenwärtigen Kraftfahrzeugposition liegt, zu finden, und gleichzeitig die für die Verarbeitung erforderliche Datenmenge zu verringern, weil nicht die geographischen Daten von sämtlichen Karteneinheiten der 4. Ordnung benötigt werden.

Weiterhin ist es möglich, eine Karte zu verwenden, die dem geographischen Teilbereich aus FIG. 2 entspricht und aus hierarchisch strukturierten Karteneinheiten bis zur 3. Ordnung zusammengesetzt ist. Eine solche Karte ist beispielsweise für die visuelle Darstellung durch eine Anzeigeeinrichtung mit einer relativ niedrigen Auflösung geeignet. Einige der in dem geographischen Gebiet vorhandenen Parkplätze P werden nicht dargestellt, weil diese für Unterbereiche, in denen die Parkplätze eine hohe Dichte ausweisen, in Karteneinheiten der 4. Ordnung gespeichert sind. Dies ermöglicht es, eine unübersichtliche Darstellung einer verwirrenden Dichte von Parkplätzen zu vermeiden.

## Patentansprüche

1. Speichermedium, auf dem geographische Daten (20, B, P, U) eines geographischen Bereichs als Karteneinheiten (17, 18, 19) zusammengefasst gespeichert sind, wobei die Karteneinheiten (17, 18 , 19) hierarchisch strukturiert sind, wobei Karteneinheiten (17, 18, 19) einer n-ten Ordnung jeweils einem geographischen Teilbereich entsprechen, wobei n eine natürliche Zahl ist, und wobei Karteneinheiten (17, 18 , 19) einer (n+1)-ten Ordnung jeweils einem geographischen Unterbereich eines der Teilbereiche entsprechen, wobei mindestens eine Karteneinheit (17, 18 , 19) geographisehe Daten (20, B, P, U) eines bestimmten Typs aufweist, und eine Kennzeichnung vorgesehen ist, die anzeigt, dass die mindestens eine Karteneinheit (17, 18 , 19) geographische Daten (20, B, P, U) des bestimmten Typs aufweist, wobei die Kennzeichnung in einer Strukturdatei innerhalb des Speichermediums gespeichert ist, **dadurch gekennzeichnet, dass** die Strukturdatei zusätzlich das geographische Gebiet, dem die Karteneinheiten (17, 18 , 19) entsprechen, umfasst.

2. Verfahren zur Erzeugung einer Karte aus geographischen Daten (20, B, P, U) eines geographischen Bereichs, die als Karteneinheiten (17, 18 , 19) zusammengefasst gespeichert sind, wobei die Karteneinheiten (17, 18 , 19) hierarchisch strukturiert sind, wobei Karteneinheiten (17, 18 , 19) einer n-ten Ordnung jeweils einem geographischen Teilbereich entsprechen, wobei n eine natürliche Zahl ist, und wobei Karteneinheiten (17, 18 , 19) einer (n+1)-ten Ordnung jeweils einem geographischen Unterbereich eines der Teilbereiche entsprechen, mit folgenden Schritten:
- Anfordern einer Strukturdatei, wobei die Strukturdatei eine Kennzeichnung, die anzeigt, welche geographischen Daten (20, B, P, U) die Karteneinheiten (17, 18, 19) aufweisen, beinhaltet, wobei die Strukturdatei zusätzlich das geographische Gebiet, dem die Karteneinheiten (17, 18 , 19) entsprechen, umfasst;
- Auswählen von Karteneinheiten (17, 18 , 19) mit zugehörigen geographischen Daten (20, B, P, U) auf Basis der Strukturdatei;
- Lesen der ausgewählten Karteneinheiten (17, 18 , 19) mit den zugehörigen geographischen Daten (20, B, P, U); und
- Zusammensetzen der Kartenbilds aus den zugehörigen geographischen Daten (20, B, P, U).

3. Verfahren nach Anspruch 2, wobei mindestens eine ausgewählte Karteneinheit (17, 18 , 19) nicht die erste Ordnung hat.

4. Verfahren nach Anspruch 2 oder 3, wobei Karteneinheiten (17, 18 , 19) mit mindestens zwei unterschiedlichen Ordnungen ausgewählt werden.

5. Navigationsvorrichtung mit einer Leseeinrichtung zum Lesen geographische Daten (20, B, P, U) eines geographischen Bereichs, die als Karteneinheiten (17, 18, 19) zusammengefaßt auf einem Speichermedium gespeichert sind, wobei die Leseeinrichtung (4) eingerichtet ist, hierarchisch strukturierte Karteneinheiten (17, 18 , 19) zu lesen, wobei Karteneinheiten (17, 18 , 19) einer n-ten Ordnung jeweils einem geographischen Teilbereich entsprechen, wobei n eine natürliche Zahl ist, und wobei Karteneinheiten (17, 18 , 19) einer (n+1)-ten Ordnung jeweils einem geographischen Unterbereich eines der Teilbereiche entsprechen, **gekennzeichnet dadurch, dass** die Leseeinrichtung (4) eingerichtet ist, eine Strukturdatei anzufordern, wobei die Strukturdatei eine Kennzeichnung, die anzeigt, welche geographischen Daten (20, B, P, U) die Karteneinheiten (17, 18, 19) aufweisen und zusätzlich das geographische Gebiet, dem die Karteneinheiten (17, 18 , 19) entsprechen, beinhaltet, und dass die Leseeinrichtung (4) eingerichtet ist, Karteneinheiten (17, 18 , 19) mit zugehörigen geographischen Daten (20, B, P, U) auf Basis der Strukturdatei auszuwählen.

6. Navigationsvorrichtung nach Anspruch 5, ferner **gekennzeichnet durch** eine Kartenerzeugungseinrichtung (3), die eingerichtet ist, eine Karte aus den hierarchisch strukturierte Karteneinheiten (17, 18, 19) zu erzeugen.

## Claims

1. Storage medium storing geographic data (20, B, P, U) of a geographic region as map units (17, 18, 19) in combination, wherein the map units (17, 18, 19) are hierarchically structured, wherein map units (17, 18, 19) of an n-th order each correspond to one geographic subregion, wherein n is a natural number, and wherein map units (17, 18, 19) of an (n+1)-th order each correspond to one geographic subrange of one of the subregions, wherein at least one map unit (17, 18, 19) has geographic data (20, B, P, U) of a particular type, and there is provision for a flag indicating that the at least one map unit (17, 18, 19) has geographic data (20, B, P, U) of the particular type, wherein the flag is stored in a structure file within the. storage medium, **characterized in that** the structure file additionally comprises the geographic area to which the map units (17, 18, 19) correspond.

2. Method for generating a map from geographic data (20, B, P, U) of a geographic region that are stored as map units (17, 18, 19) in combination, wherein the map units (17, 18, 19) are hierarchically structured, wherein map units (17, 18, 19) of an n-th order each correspond to one geographic subregion, wherein n is a natural number, and wherein map units (17, 18, 19) of an (n+1)-th order each correspond to one geographic subregion of one of the subregions, having the following steps:
- requesting a structure file, wherein the structure file includes a flag indicating which geographic data (20, B, P, U) the map units (17, 18, 19) have, wherein the structure file additionally comprises the geographic area to which the map units (17, 18, 19) correspond;
- selecting map units (17, 18, 19) having associated geographic data (20, B, P, U) on the basis of the structure file;
- reading the selected map units (17, 18, 19) having the associated geographic data (20, B, P, U); and
- compiling the map image from the associated geographic data (20, B, P, U).

3. Method according to Claim 2, wherein at least one selected map unit (17, 18, 19) is not of the first order.

4. Method according to Claim 2 or 3, wherein map units (17, 18, 19) of at least two different orders are selected.

5. Navigation apparatus having a reading device for reading geographic data (20, B, P, U) of a geographic region that are stored as map units (17, 18, 19) in combination on a storage medium, wherein the reading device (4) is configured to read hierarchically structured map units (17, 18, 19), wherein map units (17, 18, 19) of an n-th order each correspond to one geographic subregion, wherein n is a natural number, and wherein map units (17, 18, 19) of an (n+1)-th order each correspond to one geographic subrange of one of the subregions, **characterized in that** the reading device (4) is configured to request a structure file, wherein the structure file includes a flag indicating which geographic data (20, B, P, U) the map units (17, 18, 19) have and additionally the geographic area to which the map units (17, 18, 19) correspond, and **in that** the reading device (4) is configured to select map units (17, 18, 19) having associated geographic data (20, B, P, U) on the basis of the structure file.

6. Navigation apparatus according to Claim 5, further **characterized by** a map generation device (3) configured to generate a map from the hierarchically structured map units (17, 18, 19).

## Revendications

1. Support de mémoire, sur lequel des données géographiques (20, B, P, U) d'une zone géographique sont enregistrées sous forme regroupée en tant qu'unités cartographiques (17, 18, 19), les unités cartographiques (17, 18, 19) étant structurées de façon hiérarchique, des unités cartographiques (17, 18, 19) d'un n^{ième} ordre correspondant respectivement à une zone partielle géographique, n étant un nombre naturel, et des unités cartographiques (17, 18, 19) d'un (n+1)ème ordre correspondant respectivement à une sous-zone géographique de l'une des zones partielles, au moins une unité cartographique (17, 18, 19) comportant des données géographiques (20, B, P, U) d'un type défini, et une caractérisation étant prévue, qui indique que l'unité cartographique (17, 18, 19) au moins au nombre de un comporte des données géographiques (20, B, P, U) du type défini, la caractérisation étant enregistrée dans un fichier de structure à l'intérieur du support de mémoire, **caractérisé en ce que** le fichier de structure comprend en plus le secteur géographique auquel correspondent les unités cartographiques (17, 18, 19).

2. Procédé destiné à la production d'une carte à partir de données géographiques (20, B, P, U) d'une zone géographique qui sont enregistrées sous forme regroupée en tant qu'unités cartographiques (17, 18, 19), les unités cartographiques (17, 18, 19) étant structurées de façon hiérarchique, des unités cartographiques (17, 18, 19) d'un n^{ième} ordre correspondant respectivement à une zone partielle géographique, n étant un nombre naturel, et des unités cartographiques (17, 18, 19) d'un (n+1)ème ordre correspondant respectivement à une sous-zone géographique de l'une des zones partielles, avec les étapes suivantes :
- demande d'un fichier de structure, le fichier de structure contenant une caractérisation qui indique les données géographiques (20, B, P, U) que comportent les unités cartographiques (17, 18, 19), le fichier de structure comprenant en plus le secteur géographique auquel correspondent les unités cartographiques (17, 18, 19) ;
- sélection d'unités cartographiques (17, 18, 19) ayant des données géographiques (20, B, P, U) correspondantes sur la base du fichier de structure ;
- lecture des unités cartographiques (17, 18, 19) sélectionnées ayant les données géographiques (20, B, P, U) correspondantes ; et
- composition de l'image cartographique à partir des données géographiques (20, B, P, U) correspondantes.

3. Procédé selon la revendication 2, au moins une unité cartographique (17, 18, 19) sélectionnée n'ayant pas le premier ordre.

4. Procédé selon la revendication 2 ou 3, des unités cartographiques (17, 18, 19) ayant au moins deux ordres différents étant sélectionnées.

5. Appareil de navigation avec un dispositif de lecture destiné à la lecture de données géographiques (20, B, P, U) d'une zone géographique qui sont enregistrées sur un support de mémoire sous forme regroupée en tant qu'unités cartographiques (17, 18, 19), le dispositif de lecture (4) étant agencé pour lire des unités cartographiques (17, 18, 19) structurées de façon hiérarchique, des unités cartographiques (17, 18, 19) d'un n^{ième} ordre correspondant respectivement à une zone partielle géographique, n étant un nombre naturel, et des unités cartographiques (17, 18, 19) d'un (n+1)ème ordre correspondant respectivement à une sous-zone géographique de l'une des zones partielles, **caractérisé en ce que** le dispositif de lecture (4) est agencé pour demander un fichier de structure, le fichier de structure contenant une caractérisation qui indique les données géographiques (20, B, P, U) que comportent les unités cartographiques (17, 18, 19), et en plus le secteur géographique auquel correspondent les unités cartographiques (17, 18, 19), et **en ce que** le dispositif de lecture (4) est agencé pour sélectionner des unités cartographiques (17, 18, 19) ayant des données géographiques (20, B, P, U) sur la base du fichier de structure.

6. Appareil de navigation selon la revendication 5, également **caractérisé par** un dispositif de production cartographique (3) qui est agencé pour produire une carte à partir des unités cartographiques (17, 18, 19) structurées de façon hiérarchique.
